# EUROPÄISCHE PATENTSCHRIFT

(11) **EP 2 986 129 B1**
(45) Veröffentlichungstag und Bekanntmachung des Hinweises auf die Patenterteilung: **27.12.2023**
(21) Anmeldenummer: 14723697.0
(22) Anmeldetag: 16.04.2014
(51) Int. Cl.: A23B 4/027, A23L 13/70, B01D 53/28, B65D 81/26

(54) **VERFAHREN ZUM REIFEN VON WILD- ODER RINDFLEISCH UND VERWENDUNG EINES ELEMENTS HIERZU**
METHOD FOR MATURING GAME OR BEEF AND USE OF AN ELEMENT THEREFOR
PROCEDE DE MATURATION DE GIBIER OU DE BOEUF ET UTILISATION D'UN ELEMENT DE CELUI-CI

(30) Priorität: 16.04.2013 DE 102013103834
(43) Veröffentlichungstag der Anmeldung: 24.02.2016
(73) Patentinhaber: McAirlaid's Vliesstoffe GmbH, 37339 Berlingerode (DE)
(72) Erfinder: SCHMIDT, Andreas, 37115 Duderstadt (DE); TINTCHEV, Filip, 37115 Duderstadt (DE); SÖDER, Jens, 37081 Göttingen (DE)
(74) Vertreter: Cohausz Hannig Borkowski Wißgott
(86) Internationale Anmeldenummer: PCT/DE2014/100132
(87) Internationale Veröffentlichungsnummer: WO 2014/169901

(56) Entgegenhaltungen:
- EP-A1- 1 978 155
- EP-B1- 1 917 199
- WO-A1-96/08424
- DE-U1- 20 200 661
- DE-U1-202012 100 002
- DE-U1-202012 103 513
- US-A1- 2004 247 750

## Beschreibung

Die vorliegende Erfindung betrifft ein Verfahren zum Lagern und/oder Reifen von Fleisch sowie ein Element, welches eine Lage aus geordneten und/oder ungeordneten Fasern und optional weiteren Schichten umfasst, zur Verwendung in der Lagerung und/oder Reifung von Fleisch sowie eine Vorrichtung zum Lagern und/oder Reifen von Fleisch.

Die Qualität von Fleisch hängt nicht nur von der Aufzucht und der Haltung der Schlachttiere ab, sondern auch von der Behandlung und Lagerung des rohen Fleisches nach der Schlachtung. Rohes Fleisch ist direkt nach der Schlachtung zäh und hat wenig Geschmack und ein schlechtes Wasserhaltevermögen. Erst durch eine fachgerechte Lagerung und Reifung wird es aromatisch und bekömmlich. Gereiftes Fleisch hat eine bessere Wasserbindungsfähigkeit, es gart schneller und bleibt saftig. Die Fleischreifung ist ein Vorgang, der sich innerhalb der Muskelfasern des Fleisches abspielt und beginnt bereits beim Abkühlen des noch warmen Fleisches direkt nach der Schlachtung.

Die Dauer der Fleischreifung ist von der jeweiligen Tierart abhängig, bei Geflügel- und Schweinefleisch beträgt sie üblicherweise nur bis zu drei Tage, bei Kalbfleisch bis zu einer Woche, bei Wild und Rindfleisch eineinhalb bis zweieinhalb Wochen, wobei durchaus auch fünf Wochen trockengereiftes Rindfleisch erhältlich ist.

Bei Feinschmeckern besonders beliebt ist sogenanntes Dry Aged Beef (Trockenreifung). Bei diesem Reifungsverfahren hängt das Fleisch am Knochen im Ganzen, in Hälften oder in Teilstücken ab (auch als "Abhängen" bezeichnet). Durch die langsame Dry Aging-Reifung von bis zu acht Wochen wird die Fleischstruktur mürbe und durch den Wasserverlust von bis zu 30 % intensiviert sich der Eigengeschmack des Fleisches. Dieser lange Reifungsprozess schlägt sich auch im Preis des Fleisches nieder.

Eine weitere Art der Fleischreifung ist das sogenannte Wet Aging, die Nassreifung. Wet Aging bezeichnet die Reifung von Fleisch unter Ausschluss von Luft im Vakuumbeutel. Durch die fleischeigenen Milchsäurebakterien erfolgt die anaerobe Fleischreifung. Der Geschmack von im Vakuum gereiften Fleisch ist weniger vielschichtig, er hat eine metallische Komponente und einen säuerlichen Ton. Bei Nassreifung wird das Fleisch bis zu 16 Wochen gelagert und gereift, wobei die tatsächliche Reifung ca. 2 Wochen dauert.

Auch wenn die Lagerung und Reifung von Fleisch unter unterschiedlichen Bedingungen erfolgen kann, so unterscheiden sich die Verfahren nur in den sensorischen Parametern, wie Geschmack und Geruch. Besonders nachteilig bei der Lagerung und Reifung mittels Wet Aging ist der unangenehme Geruch des Fleisches, der ausströmt, wenn die Vakuumverpackung geöffnet wird.

In DE202012100002 wir ein feuchtigkeitsregulierendes Element zur Verwendung in Verpackungen offenbart, welches eine Lage aus Zellstofffasern und optional weitere Schichten aufweist sowie Mittel die den Feuchtigkeitsgehalt in der Verpackung regulieren können. Die offenbarten Elemente dienen dazu, die Menge der vorhandenen Feuchtigkeit zu regulieren und sicherzustellen, dass die Qualität der Zustand der gelagerten Produkte sich nicht verändert.

EP1917199 offenbart eine absorbierende Saugeinlage für Lebensmittelverpackungen aus einer oberen Abdecklage, einer unteren Abdecklage sowie einer zwischen den Abdecklagen befindlichen Absorptionslage und deren Verwendung als Laminat-Einlage für Lebensmittelverpackungen, wobei die Aussenkanten wenigstens teilweise verschlossen sind. Mindestens eine der beiden Abdecklagen ist eine Folie, die eine dreidimensionale Struktur aufweist und für Flüssigkeit durchlässige Öffnungen hat.

Aufgabe der vorliegenden Erfindung ist es daher, ein Verfahren zur Verfügung zu stellen, mit welchem die Fleischreifung unter den Bedingungen des Wet Aging, d. h. zu günstigeren Kosten und mit weniger Aufwand, durchgeführt werden kann, jedoch eine Fleischqualität erhalten wird, die weitgehend mit der Fleischqualität, die bei der Trockenreifung erzielt wird, vergleichbar ist. Eine weitere Aufgabe ist, ein Verfahren zur Verfügung zu stellen, bei welchem die sensorischen Eigenschaften, insbesondere Geruch und Geschmack, verbessert werden.

Gegenstand der vorliegenden Erfindung ist ein Verfahren zum Reifen von Wild- oder Rindfleisch, in welchem rohes Fleisch in Gegenwart von Alkali- und/oder Erdalkalicarbonat, das teilchenförmig und in einer Matrix aus gerichteten und/oder ungerichteten Fasern bereitgestellt wird, gelagert wird, wobei das Fleisch und die Matrix in eine Kammer eingebracht wird, die anschließend vakuumiert und verschlossen wird

Überraschenderweise wurde festgestellt, dass, wenn die Reifung von rohem Fleisch in Gegenwart einer Matrix, in der Alkali- und/oder Erdalkalicarbonat bereitgestellt ist, erfolgt, das Verfahren mit weniger Aufwand, nämlich unter den aus wirtschaftlichen Gesichtspunkten vorteilhafteren Bedingungen des Wet Agings, durchgeführt werden kann, ohne dass auf die Geschmacksqualität, die bei der Trockenreifung erzielt wird, verzichtet werden muss. Zur Durchführung des verwendeten Verfahrens kann das rohe Fleisch in Form von ganzen Tieren am Knochen, in Hälften oder in Teilstücken verwendet werden. Nachfolgend wird der Begriff "Fleisch" für alle Arten von Fleisch und auch für Fisch verwendet, ohne die Art des Lebensmittels, der Zerstückelung und die Größe des Stücks zu bezeichnen.

Das erfindungsgemäße Verfahren ist nicht nur für das sogenannte Wet Aging geeignet, es kann bei der Lagerung von allen Arten von Fleisch (Rind, Kalb, Geflügel, Wild) oder auch Fisch während des Vertriebsweges von der Schlachtung bis zum Verkauf an den Endverbraucher in Supermärkten eingesetzt werden.

Die Erfinder haben festgestellt, dass die aus dem Lebensmittel austretende Flüssigkeit von der Matrix aus gerichteten und/oder ungerichteten Fasern aufgenommen wird. Dabei wurde festgestellt, dass nicht nur die Flüssigkeit absorbiert wird, es werden auch unangenehme Gerüche aufgenommen. Es wird vermutet, dass der Fleischsaft mit dem Alkali- oder Erdalkalicarbonat ein Lactat bildet. Von Lactat ist bekannt, dass es in Lebensmitteln als Konservierungsmittel und Säurepuffer wirkt.

Erfindungsgemäß wird das Fleisch in Gegenwart eines Alkali- und/oder Erdalkalicarbonats gelagert. Das Alkali- und/oder Erdalkalicarbonat kann ausgewählt werden aus den Carbonaten und/oder Hydrogencarbonaten von Na, K, Rb, Cs, Li, Mg, Ca, Ba, Sr sowie beliebigen Gemischen daraus. Besonders bevorzugt sind Natriumcarbonat, Natriumhydrogencarbonat, Calciumcarbonat und/oder Calciumhydrogencarbonat. Die Carbonate können gegebenenfalls mit weiteren, lebensmittelgeeigneten Substanzen vermischt werden, die beispielsweise die Streufähigkeit und/oder Feuchtigkeitsempfindlichkeit der Carbonate beeinflussen.

Zur Durchführung des Verfahrens hat es sich als geeignet erwiesen, wenn das verwendete Carbonat teilchenförmig vorliegt. Die Teilchengröße des Carbonats sollte so ausgewählt werden, dass die Partikel sich in Anlagen zur Herstellung von Bahnenmaterial (Lagen) aus Fasern, die als Matrix dienen, verarbeiten lassen und in einem solchen Material gehalten werden. Carbonate mit einer Körnung zwischen 100 und 800 µm haben sich als gut geeignet erwiesen.

Als Matrix wird vorzugsweise ein Flächengebilde, das gerichtete und/oder ungerichtete Fasern aufweist, eingesetzt. Als gut geeignet erwiesen hat sich als Matrix eine Lage aus im Luftstrom aufgeschüttete Schüttung von Fasern, beispielsweise Zellstofffasern oder synthetischen Fasern. Das teilchenförmige Carbonat kann im Rahmen eines kontinuierlichen Verfahrens bei der Herstellung dieses Materials zugeführt werden. Das teilchenförmige Carbonat wird lose von den Fasern gehalten; es wird davon ausgegangen, dass eine weitere Bindung zwischen Faser und Carbonat nicht erfolgt.

Es ist aber auch möglich, die Fasern mit einer Lösung oder Suspension aus Carbonat zu besprühen, wobei das Lösungsmittel anschließend entfernt wird.

Liegt die Fasermatrix als Flächengebilde Material vor, wird das Carbonat vorzugsweise in einer Menge von 10 bis 200 g/m², insbesondere von 20 bis 100 g/m², eingesetzt.

Das Flächengewicht des erfindungsgemäß verwendeten Fasermaterials mit eingelagertem Alkali- und/oder Erdalkalicarbonat kann von 100 bis 800 g/m² betragen.

Zur Durchführung des erfindungsgemäßen Verfahrens werden das Fleisch und das in eine Matrix eingebrachte Carbonat vorzugsweise in eine Kammer eingebracht, diese wird verschlossen und das Fleisch wird unter definierten Bedingungen, wie Feuchtigkeitsgehalt und Temperatur, so lange gelagert, bis das Fleisch den gewünschten Reifegrad hat. Die Kammer kann luftdicht verschlossen sein. Die Kammer kann eine aus dem Stand der Technik bekannte Verpackung für Lebensmittel sein, wie eine beutelähnliche Verpackung oder ein geeigneter Lebensmittelbehälter, die vorzugsweise verschließbar sein sollte, sowie Verpackungen, die aus einer Schale und einer Umverpackung, wie einem Beutel und/oder einer Folie bestehen. In einer möglichen Ausführungsform wird die Verpackung vakuumiert und anschließend verschlossen (versiegelt).

Aus dem Stand der Technik bekannte und für das erfindungsgemäße Verfahren gut geeignete Verpackungen sind Beutel und Folien einschließlich Vakuumbeutel, Vakuumfolien, Schrumpfbeutel, Schalen mit Deckel oder einer Umhüllung, Skinverpackungen und MAP-Verpackungen (Modified Atmosphere Packaging) und beliebige Kombinationen daraus. Die Reifung kann in einem Temperaturbereich vom Gefrierpunkt des Fleisches bis Raumtemperatur, ca. von -5°C bis 20°C, vorzugsweise von -1 bis 6°C, erfolgen. Die Reifedauer beträgt üblicherweise von 1 bis 15 Wochen, sie hängt von der Reifetemperatur ab. Insbesondere bei langen Transportwegen, wie bei einem Seetransport, erfolgt die Reifung häufig in einem Bereich von -1 °C und 6 °C über 10 bis 15 Wochen.

Erfindungsgemäß wird das Carbonat in einer Matrix von gerichteten und/oder ungerichteten Fasern bereitgestellt. Diese Matrix wird vorzugsweise in Form eines sogenannten Pads oder Matte in eine Verpackung gelegt, auf dieses Pad wird das Lebensmittel gelagert und die Verpackung wird verschlossen. Die Matrix dient so gleichzeitig als Unterlage für das Lebensmittel.

Wie bereits voranstehend erwähnt, ist die erfindungsgemäß verwendete Matrix vorzugsweise eine Lage aus Fasern, die vorzugsweise in Form von vliesartigem oder gewebeartigem Material vorliegen. Die Zellstofffasern sind bevorzugt, da es sich um preiswerte und im Handel verfügbare Materialien handelt, die einfach zu bearbeiten sind. Als besonders geeignete Absorptionslagen haben sich Airlaid-Vliese oder Tissuepapiere erwiesen. In einer bevorzugten Ausführungsform ist die Absorptionslage aus Zellstofffasern ein Airlaid. In einer besonders bevorzugten Ausgestaltung weist die Zellstofflage über ihre Fläche verteilte Prägebereiche auf, in denen die Fasern stärker als in den übrigen Bereichen miteinander verpresst und hierdurch klebstoff- und/oder bindemittelfrei verbunden sind. Vorzugsweise ist der Saugkern in dieser Ausführungsform aus einer Faserstoffbahn aus Zellstofffasern hergestellt, welche unter Erzeugung der Prägebereiche im Druckbereich bindemittelfrei, punkt- oder linienförmig kalandriert und verbunden sind. Die Herstellung derartiger Materialien ist beispielsweise im europäischen Patent 1 032 342 beschrieben. Die Faserschicht der Lage aus Zellstofffasern ist in dieser Ausgestaltung so strukturiert, dass die Zellstofffasern außerhalb dieser diskreten Prägebereiche gelockert übereinander oder nur schwach aneinander haftend vorliegen, wohingegen sie in den Prägebereichen miteinander verpresst sind und eine innige Verbindung mit den jeweils benachbarten Zellstofffasern eingehen. Durch diese Ausgestaltung ist ein völliger Verzicht auf Klebstoffe und Bindemittel zur Bildung des Verbundes aus Zellstofffasern möglich, was ein einfaches und vollständiges Recycling ermöglicht. In den Prägebereichen haften die Fasern nicht lediglich aneinander. Vielmehr wird durch die Druckbeaufschlagung erreicht, dass benachbarte Zellstofffasern in diesen Prägebereichen fest miteinander verbunden sind. Diese Verbindung vermag auch der Einwirkung von Feuchtigkeit zu widerstehen, so dass sich die erfindungsgemäß verwendete Absorptionslage durch mechanische Belastbarkeit auch in nassem Zustand auszeichnet. Die Bereiche außerhalb der diskreten Prägebereiche, in denen die Fasern gelockert übereinander oder nur schwach aneinander haftend vorliegen, zeichnen sich durch eine gute Absorptionsfähigkeit aus. In diesen Bereichen liegen vorzugsweise auch die Mittel zum Binden von Feuchtigkeit vor. Diese können innerhalb der einzelnen Zellstofffasern verteilt sein und in den Bereichen außerhalb der diskreten Prägebereiche stehen sie aufgrund des lockeren Verbundes der Zellstofffasern in gutem Kontakt mit der Umgebung, insbesondere mit der Feuchtigkeit. Liegen größere Mengen Feuchtigkeit bzw. Flüssigkeit vor, so werden diese von dem lockeren Verbund aus Zellstofffasern aufgenommen, über die gesamte Fläche der Absorptionslage verteilt und dort gehalten.

Zur Erhöhung der Stabilität kann die verwendete Matrix aus gerichteten und/oder ungerichteten Fasern kann optional weitere Schichten aufweisen, beispielsweise Bahnen, die oberhalb und/oder unterhalb dieser Lage aus Fasern angeordnet sind. Zusätzlich können auch eine Basislage und/oder Decklage angeordnet sein. Diese Basislage und die Deckschicht können größer sein als die sich unmittelbar an die Faserlage anschließenden weiteren Schichten und an den Rändern verschlossen sein, wodurch ein für die Carbonatteilchen geschlossenes Element gebildet wird. Eine solche Ausgestaltung hat den Vorteil, dass die locker in den Faserlagen gehaltenen Teilchen aus Carbonat nicht unmittelbar mit dem Fleisch in Kontakt kommen. Die Basislage und/oder die Deckschicht können gleich oder verschieden sein und sind vorzugsweise Baumwolle, Vlies, Tissue und/oder perforierte Folie.Ein weiterer Gegenstand der vorliegenden Erfindung ist ein Element zur Verwendung in der Lagerung und/oder Reifung von Fleisch, welches eine Lage aus geordneten und/oder ungeordneten Fasern und optional weiteren Schichten umfasst, das sich dadurch auszeichnet, dass es Alkali- und/oder Erdalkalicarbonate und/oder Hydrogencarbonate in fester Form enthält.

Das erfindungsgemäße feuchtigkeitsregulierende Element ist vorzugsweise ein flächiger Körper. Dieser kann auf die gewünschte Größe zugeschnitten werden und das Fleisch kann während der Lagerung darauf gelegt werden. Die Lagerung kann in einer Art Verpackung erfolgen und das Element kann in diese Verpackung eingelegt werden oder Teil dieser Verpackung sein. Die Lage aus Fasern hat den Vorteil, dass diese zum einen quasi als Trägermaterial für das Carbonat wirken kann, zum anderen zeigen Fasern, insbesondere Zellstofffasern, Absorptionseigenschaften, d. h. aus dem Fleisch austretende Flüssigkeit wird von der Faserschicht aufgenommen und das Fleisch ist während der Lagerung nicht damit in Kontakt.

Ein weiterer Gegenstand der vorliegenden Erfindung ist die Verwendung eines Elements zur Reifung von Wild- oder Rindfleisch nach Anspruch 12.

Nachfolgend wird die erfindungsgemäß verwendete Matrix anhand eines Ausführungsbeispiels unter Bezugnahme auf die Zeichnungen näher erläutert. In diesem Ausführungsbeispiel wird die Matrix als flächiges Element eingesetzt. Darin zeigen:
- Figur 1: einen stark vergrößerten Teilschnitt durch das Element,
- Figur 2: einen stark vergrößerten Teilschnitt durch ein mehrlagiges Element,
- Figur 3: einen stark vergrößerten Teilschnitt durch weiteres mehrlagiges Element,
- Figur 4: einen Teilschnitt durch eine Verpackung,
- Figuren 5 bis 7: die graphische Darstellung der Versuchsergebnisse der sensorischen Prüfung von gereiftem Fleisch.

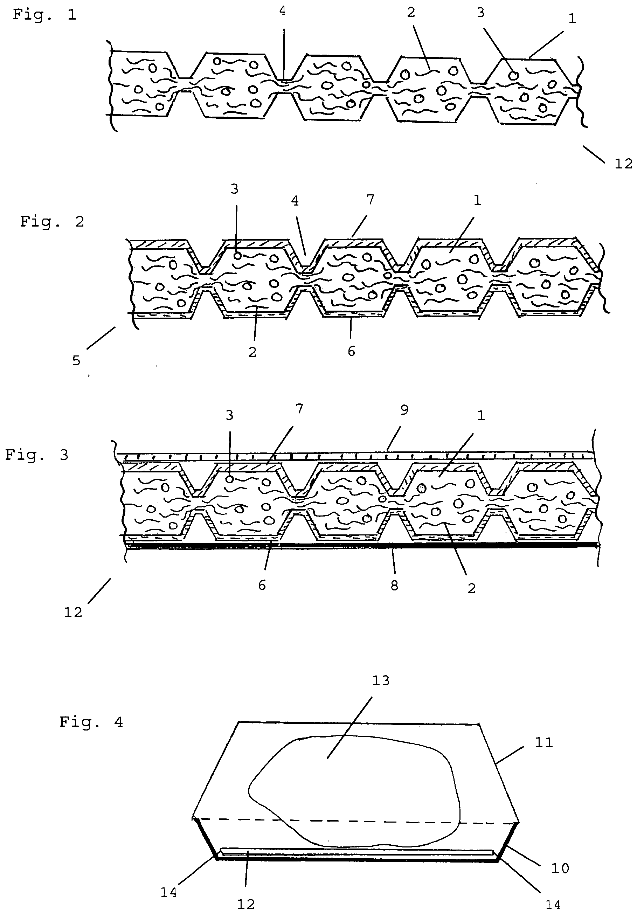

Figur 1 zeigt einen Teilschnitt durch das erfindungsgemäß verwendete Element 12 aus Fasern, in welchem Carbonat eingelagert (immobilisiert) ist. Dieses Element weist eine Lage 1 auf, die einen hohen Anteil an Fasern 2 aufweist, in die teilchenförmiges Carbonat 3 eingearbeitet ist. Die Lage 1 bildet den Kern des Elements 12.

Die Zellstofffasern 2 sind in den Prägebereichen 4 verdichtet und auf diese Weise miteinander verbunden. Die Prägebereiche 4 liegen sich in der hier dargestellten Ausführungsform auf der Ober- und Unterseite einander gegenüber, so dass im jeweiligen Prägebereich 4 nur noch ein schmaler Steg miteinander verbundener Fasern verbleibt. Die übrigen, zwischen den jeweiligen Prägebereichen 4 angeordneten Bereiche der Schicht 1 weisen eine lockere Faserschichtung auf. Eine innige Verbindung zwischen den Fasern 2 besteht in diesen Bereichen nicht.

Das Absorptionsverhalten und das Rückhaltevermögen von Feuchtigkeit, insbesondere von Fleischsaft, wird durch die Lage 1 aus den Fasern 2 sowie dem Carbonat 3 sowie gegebenenfalls weiteren Stoffen, die in die Lage 1 eingearbeitet sein können, bestimmt. Die Lage 1 hat in der hier dargestellten Ausführungsform in den Prägebereichen 4 die Gestalt von Pyramidenstümpfen oder Kegelstümpfen, wobei der Winkel der gebildeten Schrägen vorzugsweise zwischen 10° und 45° liegen sollte.

Sofern Zellulosematerial für die Faserstoffbahn 1 verwendet wird, lässt sich preiswert zur Verfügung stehendes Massenmaterial einsetzen. Vorzugsweise wird ein sogenannter Fluff-Pulp eingesetzt, der sich durch ein sehr gutes Bindungsverhalten auszeichnet, was die mechanische Festigkeit des Elements gegen vertikale Zugkräfte verbessert.

Bei der Herstellung des erfindungsgemäßen Elements wird zunächst ein Bahnenmaterial hergestellt, das anschließend auf die gewünschte Größe geschnitten wird. Die verwendeten Elemente haben üblicherweise die Form einer Matte (auch Pad genannt).

Bei der Herstellung des Bahnenmaterials in einem kontinuierlichen Verfahren wird die später die Lage 1 bildende Faserstoffbahn aus einer im Luftstrom aufgeschütteten Schüttung von Fasern 2, vorzugsweise aus defiberisiertem Zellstoff (wood pulp), und Carbonat 3 und gegebenenfalls eingearbeiteten weiteren Stoffen hergestellt. Bei Verwendung von Zellstofffasern kann auf die am Markt verfügbaren, nachwachsenden Holzrohstoffe zurückgegriffen werden.

Das Verfahren der Faserschüttung als Ausgangsprodukt für die Lage 1 ermöglicht eine trockene Verarbeitung der Fasern 2 und damit bei der anschließenden Prägung der mehrlagigen Bahn zwischen zwei Strukturwalzen eine sehr gute Verdichtung der Zellstofffasern in den diskreten Prägebereichen 4. Außerhalb dieser Prägebereiche 4 liegen die Fasern locker aneinander, wodurch die Carbonatteilchen innerhalb dieser lockeren Bereiche gehalten werden und die Prägebereiche verhindern, dass die Teilchen innerhalb des Elements wandern und sich an einer Stelle konzentrieren. Darüber hinaus wird durch die lockere Schichtung der Fasern zwischen den jeweiligen Prägebereichen die Flexibilität des Elementes 1 verbessert.

Die Herstellung des erfindungsgemäßen Elements erfolgt vorzugsweise aus Bahnenmaterial, welches in einem kontinuierlichen Prozess gefertigt wird. In luftunterstützter Schichtung werden zunächst die Fasern 2 und das Carbonat 3 sowie gegebenenfalls weitere Zuschlagstoffe zur Bildung der Schicht 1 gelegt. Anschließend erfolgt in einem Kalander mit zwei strukturierten Kalanderwalzen die Herstellung der Prägebereiche 4. Ein mögliches Herstellungsverfahren wird z. B. im europäischen Patent 1 032 342 offenbart.

In Abhängigkeit davon, wie dick die fertige Bahn sein soll, ist es auch möglich, mehrere Schichten aus Fasern 2 und Carbonat 3 sowie gegebenenfalls weiteren Zuschlagstoffen übereinander zu schichten und anschließend in den Kalander einzuführen, um die Prägebereiche 4 zu erhalten. Auf diese Weise wird das die Feuchtigkeit bindende Mittel lagenweise in die Bahn eingearbeitet. Eine homogene Verteilung wird erreicht, wenn die die Feuchtigkeit bindenden Mittel gemeinsam mit den Zellstofffasern, also in den Zellstofffasern gleichmäßig verteilt, zu Bahnenmaterial verarbeitet werden.

Eine mehrlagige Bahn 5, wie sie in Figur 2 dargestellt ist, kann beispielsweise hergestellt werden, indem eine Deckschicht 6 und/oder eine Basisschicht 7 zunächst als Trägerschicht verwendet wird. Auf diese Trägerschicht 6 bzw. 7 wird die Schüttung von Fasern 2 und Carbonat 3 im Luftstrom aufgetragen. Anschließend wird diese Anordnung aus Trägerschicht und Schüttung gemeinsam durch die Strukturwalzen des Kalanders hindurchgeführt. Alternativ kann zuvor, d. h. vor dem abschließenden Hindurchführen durch den Kalander, die andere der beiden Schichten 6, 7, welche also nicht bereits die Trägerschicht ist, auch auf die Zellstoffschicht 1 aufgelegt werden.

Die beiden Schichten 6 und 7 können auch noch nachträglich gegebenenfalls mit weiteren Lagen in an sich bekannter Weise aufgebracht werden. Werden die weiteren Lagen nachträglich aufgebracht, so können sie eine beliebige Oberflächenstruktur aufweisen, beispielsweise glatt sein oder eine raue Oberfläche haben.

Die in Figur 2 dargestellte Ausführungsform zeigt insgesamt 3 Schichten, nämlich eine aus den Lagen 6, 1 und 7 zusammengesetzte Bahn.

Die unterste Lage dient als Basismaterial und als obere Lage ist eine Schicht aufgebracht. Die Deckschicht 6 hat den Vorteil, dass das Fleisch nicht unmittelbar mit den Fasern und dem Carbonat in Kontakt tritt.

Als Basismaterial und auch als Deckschicht 6 kommen insbesondere solche Materialien in Betracht, durch die Wasser und Dampf hindurchtreten können, die aber für das eingearbeitete Carbonat und ggf. vorhandene weitere Komponenten undurchlässig sind. Beispiele für geeignete Materialien sind vliesartige Materialien und Tissue auf Zellulosebasis und/oder auf Kunststoffbasis oder genadelte oder auf sonstige Weise flüssigkeitsdurchlässig gemachte Folie, wie sie in der europäischen Patentanmeldung 1 917 199 beschrieben wird.

Die Seitenkanten des Elements können offen oder geschlossen sein. Das Verschließen der Kanten kann mittels Ultraschallverschweißen, punktförmigem Verschweißen, thermischem Verschweißen oder Verkleben erfolgen. Bei dem Verschließen der Seitenkanten ist es nicht unbedingt erforderlich, dass diese vollständig verschlossen sind, es ist allerdings von Vorteil, wenn die Fasermatrix und das Carbonat bei Belastung des Elements Matrix durch Fleisch nicht nach außen austreten.

In Fig. 3 ist ein erfindungsgemäßes Element dargestellt, das den gleichen Aufbau hat, wie das Element aus Fig. 2, jedoch von weiteren Lagen 8 und 9 umgeben ist. Diese weiteren Lagen 8 und 9 können größer sein als die Lage 1 und die gegebenenfalls daran angeordneten Schichten 6 und 7. Die Lagen 8 und 9 können gleich oder verschieden sein und dienen dazu, die Eigenschaften des Elements an die spezifischen Anforderungen der zu lagernden Produkte anzupassen. Diese weiteren Schichten können miteinander verbunden sein, ohne dass die Lage 1 und/oder die gegebenenfalls daran angeordneten Schichten 6 und 7 mit erfasst ist. Diese beiden Lagen bilden für das Element eine Umhüllung. Sie können aus textilem, vliesartigem oder folienartigem Material oder Tissue sein. Zumindest eine der Schichten 8 bzw. 9 einer solchen Umhüllung sollte für die Feuchtigkeit durchlässig sein. Vorzugsweise sind die Lagen 8 bzw. 9 ausgewählt aus Baumwolle, Vlies, Tissue und/oder perforierter Folie. In einer möglichen Ausführungsform ist eine der weiteren Lagen 8, 9 für Feuchtigkeit undurchlässig. In einer solchen Ausgestaltung kann beispielsweise die dem Produkt zugewandte Lage 9 für Feuchtigkeit durchlässig und die der Verpackung zugewandte Lage 8 für Feuchtigkeit undurchlässig sein. In dieser Ausführungsform wird vermieden, dass für den Fall, dass das Bindevermögen des erfindungsgemäßen Elements 12 für Feuchtigkeit erschöpft ist und durch den Druck des Produkts 13 auf dem Element 12 Flüssigkeit quasi ausgedrückt wird und sich am Boden der Verpackung 10 sammelt, diese Flüssigkeit über diese untere Lage wieder in Richtung Produkt gelangt.

Figur 4 zeigt eine mögliche Ausgestaltung, in welcher das Fleisch gelagert werden kann. Diese Ausgestaltung hat die Form einer Lebensmittelverpackung und besteht aus einer Unterschale 10 und einem Deckel 11, in die das erfindungsgemäße Element 12 eingelegt wurde. Das Element 12 dient als Unterlage für das rohe Fleisch 13 und die Verpackung wird mit dem Deckel 11 verschlossen. Je nach Ausgestaltung dieses Produkts aus Unterschale 10 und Deckel 11 kann Vakuum angelegt werden.

Die Ausgestaltung, wie sie in Figur 4 dargestellt ist, bietet die Möglichkeit, rohes Fleisch in zerteilter Form reifen zu lassen.

### Versuchsbericht, Fleischreifung

Die Fleischreifung ist für die Qualität von Rindfleisch ein wichtiges Kriterium. Enzymatische Prozesse bewirken eine Proteolyse, die das Fleisch zart macht. Allerdings spielen die Reifungsbedingungen eine wichtige Rolle. Ein wesentliches Kriterium ist der Kontakt mit dem Fleischserum. Besteht dieser Kontakt über einen längeren Zeitraum, kann ein metallischer Geschmack entstehen, der unerwünscht ist. Bei der klassischen Reifung ist das Fleisch nur von Luft umgeben. In Abhängigkeit von der relativen Luftfeuchtigkeit findet eine mehr oder weniger starke Austrocknung der oberen Schichten statt und es kommt zu Verfärbungen und ggf. Schimmelbefall. Diese Effekte können zwar durch eine kontrollierte Atmosphäre weitgehend vermieden werden, sind aber mit erheblichen Kosten verbunden.

Üblicherweise findet die Reifung von Fleisch in einer Vakuumverpackung statt. Dabei sind gute hygienische Bedingungen möglich und Verluste durch Austrocknung und Verwerfen ausgetrockneter Schichten können vermieden werden. Allerdings befindet sich das Fleisch permanent in Kontakt mit dem Serum, was der geschmacklichen Qualität abträglich ist. Diesem Mangel soll der Einsatz von Feuchtigkeitsabsorptionspads abhelfen, die freie Flüssigkeit absorbieren.

### Testansatz:

Roastbeef (*m*. *longissimus dorsi*) wird in Stücken zu 1 kg mit und ohne Feuchteabsorptionspads vakuumverpackt. Die Lagerung erfolgt bei 4 °C für insgesamt 42 Tage. Es werden je Lagerzustand (sofort, 2, 4 und 6 Wochen) und Verpackungsvariante jeweils 5 Proben untersucht.

### Eingesetzte Pads:

### Standard-Pad (Pad) (Stand der Technik)

### Pad mit Carbonat (Erfindung)

Die Bewertung erfolgt anhand folgender Parameter:
Visuelle Überprüfung der Verpackung
Beurteilung des Geruchs
pH-Wert
Farbe

In der Verpackung vorliegende freie Serummenge
Schnittfestigkeit
Mikrobiologische Untersuchungen
Nach Zubereitung (Scheiben ca. 25 mm dick; Kontaktgrill; Garzustand medium): Garverlust
Sensorische Bewertung
o Geruch
o Geschmack
o Textur

### Untersuchungsmaterial

Es wurde Roastbeef (m. longissimus dorsi) von am Vortag geschlachteter Tiere gleichen Geschlechts, gleichen Alters, die in der Region unter identischen Bedingungen (gleiches Futter, Laufstall) gehalten worden waren, in Stücke von 800 - 1000 g geteilt und mit bzw. ohne Pad vakuumverpackt.

Die Lagerung erfolgte im Temperaturprüfschrank bei 4,0 ±0,1 °C.

### 2. Beurteilung des Geruchs

Die Beurteilung des Geruchs erfolgte etwa 3-5 Minuten nach dem Öffnen der Verpackung im mikrobiologischen Labor durch mindestens 3 Personen. Es wurde eine einfach beschreibende Prüfung in Anlehnung an L00.90-60 der amtlichen Sammlung von Untersuchungsmethoden nach §64 LFGB durchgeführt. Die Unterteilung der Punkteskala zeigt Tabelle 2.

**Tabelle 2: Bewertung des Geruchs**

| **Punktzahl** | **Bewertung** |
|---|---|
| **0** | **Völlig einwandfrei** |
| **1** | **Akzeptabel, jedoch sehr geringe Abweichung wahrnehmbar** |
| **2** | **Akzeptabel, geringe Abweichungen wahrnehmbar** |
| **3** | **Gerade noch akzeptabel, Abweichung vorhanden** |
| **4** | **Nicht mehr akzeptabel, deutliche Geruchsabweichung** |
| **5** | **Extreme Geruchsabweichung** |

Der Geruch wurde hinsichtlich der Parameter "säuerlich" und "Verderb" entsprechend des Schemas Tabelle 2 bewertet.

| | | | | | |
|---|---|---|---|---|---|
| **Textur- und Geschmackstest** | **Parameter 1** | **Parameter 2** | **Parameter 3** | **Parameter 4** | **Parameter 5** |
| | Zartheit | Säuerlicher Geschmack | Saftigkeit | Fleischgeschmack | Fehlgeschmack metalisch |

Die Prüfung erfolgte in Anlehnung an die DLG-Methode zur sensorischen Analyse. In der Prüfung sind jedem Prüfmerkmal Merkmalseigenschaften bzw. Mängelansprachen zugeordnet. Diese werden entsprechend der produktspezifischen 5-Punkte-Skala bewertet. Die DLG-Methode der sensorischen Analyse ist eine "Beschreibende sensorische Prüfung mit integrierter Bewertung" und bezieht sich methodisch u.a. auf die DIN 10964, "Einfach beschreibende Prüfung", die DIN 10969 "Beschreibende Prüfung mit anschließender Qualitätsbewertung".

**Tabelle 3: 5-Punktebewertungsschema nach DLG**

| **Skalenbereich (Note)** | **Qualitätsbeschreibung** | **Qualitätsanforderungen** | **Merkmalseigenschaften** | **Qualitätsbereiche** |
|---|---|---|---|---|
| 5 | sehr gut | vollkommen, volle Erfüllung der Erwartungen | erwünscht | hohe Qualität |
| 4 | gut | geringfügige Abweichungen | | |
| 3 | zufriedenstellend | merkliche Abweichungen, bedingte Erfüllung der Erwartungen | tolerierbar | mittlere Qualität |
| 2 | weniger zufriedenstellend | deutliche Fehler | | |
| 1 | nicht zufriedenstellend | starke Fehler, nicht erfüllte Erwartungen | unerwünscht | unzureichende Qualität |
| 0 | ungenügend | völlig verändert, nicht verzehrfähig | | |

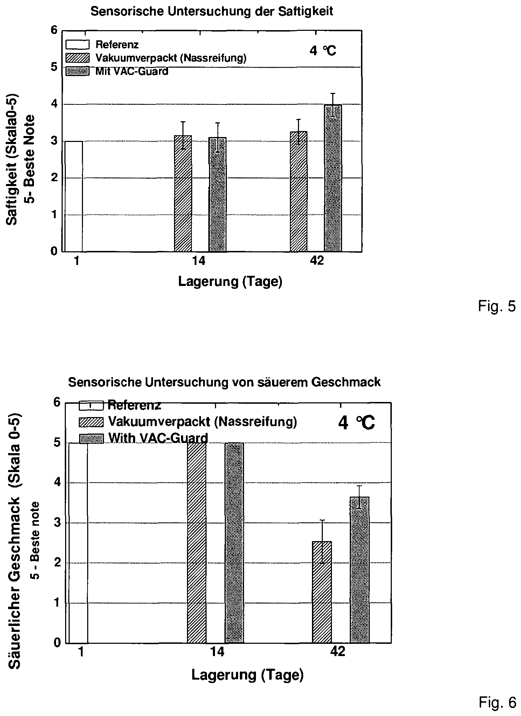

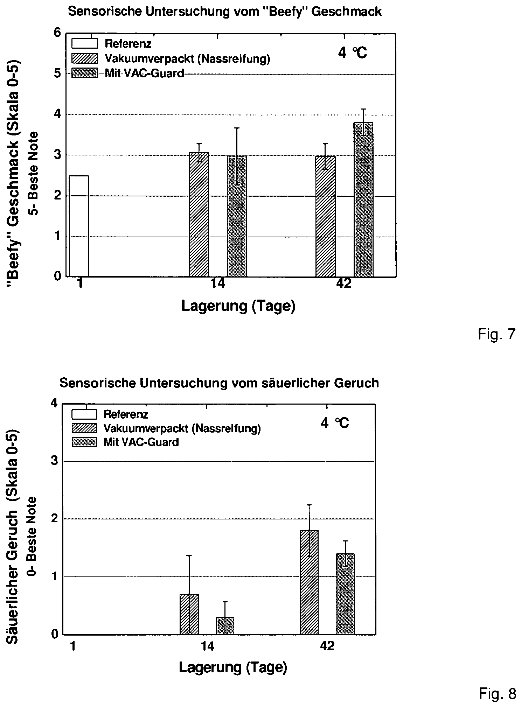

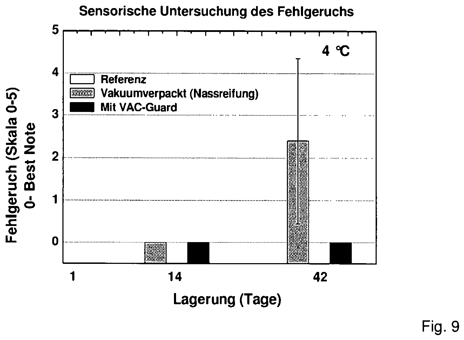

In den Figuren 5 bis 9 sind die Ergebnisse der sensorischen Prüfung grafisch dargestellt.

### Bezugszeichenliste

- 1: Lage
- 2: Fasern
- 3: Carbonat
- 4: Prägebereich
- 5: mehrlagige Bahn
- 6: Deckschicht
- 7: Basisschicht
- 8, 9: weitere Lage
- 10: Unterschale
- 11: Deckel
- 12: erfindungsgemäßes Element
- 13: gelagertes Produkt
- 14: Seitenkante

## Patentansprüche

1. Verfahren zum Reifen von Wild- oder Rindfleisch, in welchem rohes Fleisch in Gegenwart von Alkali- und/oder Erdalkalicarbonat (3), das teilchenförmig und in einer Matrix (1) aus gerichteten und/oder ungerichteten Fasern (2) bereitgestellt wird, gelagert wird, wobei das Fleisch und die Matrix (1) in eine Kammer eingebracht wird, die anschließend vakuumiert und verschlossen wird.

2. Verfahren nach Anspruch 1, **dadurch gekennzeichnet, dass** die Matrix (1) aus gerichteten und/oder ungerichteten Fasern (2) in Form eines Flächengebildes vorliegt.

3. Verfahren nach Anspruch 2, **dadurch gekennzeichnet, dass** oberhalb und/oder unterhalb der Matrix (1) weitere Schichten (6, 7) angeordnet sind.

4. Verfahren zum Reifen von Fleisch nach Anspruch 3, **dadurch gekennzeichnet, dass** oberhalb und/oder unterhalb der Schichten (6, 7) eine Basislage (8) und gegebenenfalls auf der gegenüberliegenden Seite eine Decklage (9) angeordnet ist.

5. Verfahren nach einem der Ansprüche 1 bis 4, **dadurch gekennzeichnet, dass** das Alkali- und/oder Erdalkalicarbonat ausgewählt ist aus den Carbonaten und/oder Hydrogencarbonaten von Na, K, Rb, Cs, Li, Mg, Ca, Ba, Sr sowie beliebigen Gemischen daraus.

6. Verfahren nach Anspruch 5, **dadurch gekennzeichnet, dass** das Alkali- und/oder Erdalkalicarbonat ausgewählt ist aus Natriumcarbonat, Natriumhydrogencarbonat, Calciumcarbonat und/oder Calciumhydrogencarbonat.

7. Verfahren nach einem der Ansprüche 1 bis 6, **dadurch gekennzeichnet, dass** das Verfahren in einer Vorrichtung durchgeführt wird, deren Bestandteile eine Kammer zum Umschließen des Fleischstückes und ein in diese Kammer einlegbares Element sind, wobei das Element eine Lage (1) aus geordneten und/oder ungeordneten Fasern (2) und optional weitere Schichten (6, 7) umfasst und Alkali- und/oder Erdalkalicarbonate und/oder Hydrogencarbonate enthält.

8. Verfahren nach Anspruch 7, **dadurch gekennzeichnet, dass** die Kammer ausgewählt ist aus Beuteln und Folien einschließlich Vakuumbeutel, Vakuumfolien, Schrumpfbeutel, Schalen mit Deckel oder einer Umhüllung, Skinverpackungen und MAP-Verpackungen und beliebigen Kombinationen daraus.

9. Verfahren nach einem der Ansprüche 1 bis 8, **dadurch gekennzeichnet, dass** die Matrix (1) eine Lage aus im Wesentlichen unregelmäßig angeordneten Zellstofffasern ist, die bereichsweise durch Verpressen unter Verdichtung der Zellstofffasern in den verpressten Bereichen miteinander verbunden sind.

10. Verfahren nach einem der Ansprüche 8 bis 9, **dadurch gekennzeichnet, dass** oberhalb und/oder unterhalb der Lage (1) und/oder der optional vorhandenen weiteren Schichten (6, 7) eine Basislage (8) und auf der der Basislage gegenüberliegenden Seite eine Deckschicht (9) angeordnet sind.

11. Verfahren nach einem der Ansprüche 8 bis 10, **dadurch gekennzeichnet, dass** die Basislage und/oder die Deckschicht gleich oder verschieden sind und ein Vlies oder ein Tissue sind.

12. Verwendung eines Elements, welches eine Lage (1) aus geordneten und/oder ungeordneten Fasern (2) und optional weitere Schichten (6, 7) umfasst und Alkali- und/oder Erdalkalicarbonate und/oder Hydrogencarbonate in Form von Teilchen enthält, zur Reifung von Wild- oder Rindfleisch.

## Claims

1. Process for the ageing of game or beef, in which raw meat is stored in the presence of alkali and/or alkaline earth metal carbonate (3), which is made available in particle form and in a matrix (1) of oriented and/or non-oriented fibres (2), wherein the meat and the matrix (1) are placed in a chamber which is then evacuated and sealed.

2. Process according to Claim 1, **characterized in that** the matrix (1) of oriented and/or non-oriented fibres (2) is in the form of a sheet material.

3. Process according to Claim 2, **characterized in that** further layers (6, 7) are arranged above and/or below the matrix (1).

4. Process for the ageing of meat according to Claim 3, **characterized in that** a base layer (8) and, optionally on the opposite side, a covering layer (9) are arranged above and/or below the layers (6, 7).

5. Process according to any of Claims 1 to 4, **characterized in that** the alkali and/or alkaline earth metal carbonate is selected from the carbonates and/or hydrogen carbonates of Na, K, Rb, Cs, Li, Mg, Ca, Ba, Sr, or any desired mixtures thereof.

6. Process according to Claim 5, **characterized in that** the alkali and/or alkaline earth metal carbonate is selected from sodium carbonate, sodium hydrogen carbonate, calcium carbonate, and/or calcium hydrogen carbonate.

7. Process according to any of Claims 1 to 6, **characterized in that** the process is carried out in a device whose components are a chamber for enclosing the piece of meat and an element that can be placed in this chamber, wherein the element comprises a layer (1) of ordered and/or unordered fibres (2) and optionally further layers (6, 7) and contains alkali and/or alkaline earth metal carbonates and/or hydrogen carbonates.

8. Process according to Claim 7, **characterized in that** the chamber is selected from bags and films, including vacuum bags, vacuum films, shrink-bags, shells with a cover or a wrapping, skin packs and MAP packages, or any desired combinations thereof.

9. Process according to any of Claims 1 to 8, **characterized in that** the matrix (1) is a layer of essentially irregularly arranged wood pulp fibres, which are bonded together in certain areas by being pressed together with compression of the wood pulp fibres in the pressed areas.

10. Process according to either of Claims 8 and 9, **characterized in that** a base layer (8) and, on the side opposite the base layer, a covering layer (9) are arranged above and/or below the layer (1) and/or the optional further layers (6, 7).

11. Process according to any of Claims 8 to 10, **characterized in that** the base layer and/or the covering layer are the same or different and are a nonwoven or a tissue.

12. Use of an element which comprises a layer (1) of ordered and/or unordered fibres (2) and optionally further layers (6, 7) and contains alkali and/or alkaline earth metal carbonates and/or hydrogen carbonates in the form of particles for the ageing of game or beef.

## Revendications

1. Procédé d'affinage de gibier ou de la viande bovine, dans lequel de la viande crue est stockée en présence de carbonate alcalin et/ou alcalino-terreux (3) qui est fourni sous forme particulaire et dans une matrice (1) de fibres orientées et/ou non orientées (2), la viande et la matrice (1) étant placées dans une chambre qui est ensuite fermée et mise sous vide.

2. Procédé selon la revendication 1, **caractérisé en ce que** la matrice (1) de fibres orientées et/ou non orientées (2) se présente sous la forme d'une structure surfacique.

3. Procédé selon la revendication 2, **caractérisé en ce que** d'autres couches (6, 7) sont disposées au-dessus et/ou au-dessous de la matrice (1).

4. Procédé d'affinage de la viande selon la revendication 3, **caractérisé en ce qu'**une couche de base (8) et éventuellement du côté opposé une couche de recouvrement (9) sont disposées au-dessus et/ou au-dessous des couches (6, 7).

5. Procédé selon l'une des revendications 1 à 4, **caractérisé en ce que** le carbonate alcalin et/ou alcalino-terreux est choisi parmi les carbonates et/ou bicarbonates de Na, K, Rb, Cs, Li, Mg, Ca, Ba, Sr et tout mélange de ceux-ci.

6. Procédé selon la revendication 5, **caractérisé en ce que** le carbonate alcalin et/ou alcalino-terreux est choisi parmi le carbonate de sodium, le bicarbonate de sodium, le carbonate de calcium et/ou le bicarbonate de calcium.

7. Procédé selon l'une des revendications 1 à 6, **caractérisé en ce que** le procédé est mis en œuvre dans un dispositif dont les constituants sont une chambre destinée à enfermer le morceau de viande et un élément pouvant être inséré dans cette chambre, l'élément comprenant une couche (1) de fibres ordonnées et/ou désordonnées (2) et éventuellement d'autres couches (6, 7) et contenant des carbonates et/ou bicarbonates alcalins et/ou alcalino-terreux.

8. Procédé selon la revendication 7, **caractérisé en ce que** la chambre est choisie parmi les sachets et les films incluant les sachets sous vide, les films sous vide, les sachets rétractables, les barquettes avec couvercle ou emballage, les emballages skin et les emballages MAP et toutes combinaisons de ceux-ci.

9. Procédé selon l'une des revendications 1 à 8, **caractérisé en ce que** la matrice (1) est une couche de fibres de cellulose qui sont disposées de manière sensiblement irrégulière et qui sont reliées entre elles par zones par pressage avec compression des fibres de cellulose dans les zones pressées.

10. Procédé selon l'une des revendications 8 et 9, **caractérisé en ce qu'**une couche de base (8) et, du côté opposé à la couche de base, une couche de recouvrement (9) sont disposées au-dessus et/ou au-dessous de la couche (1) et/ou des autres couches (6, 7) éventuellement présentes.

11. Procédé selon l'une quelconque des revendications 8 à 10, **caractérisé en ce que** la couche de base et/ou la couche de recouvrement sont identiques ou différentes et sont un non-tissé ou un tissu.

12. Utilisation d'un élément qui comprend une couche (1) de fibres ordonnées et/ou désordonnées (2) et éventuellement d'autres couches (6, 7) et qui contient des carbonates et/ou bicarbonates alcalins et/ou alcalino-terreux sous la forme de particules, afin d'affiner du gibier ou de la viande bovine.
